# DEMANDE DE BREVET EUROPEEN

(11) **EP 0 948 921 A1**
(43) Date de publication de la demande: **13.10.1999**
(21) Numéro de dépôt: 98400849.0
(22) Date de dépôt: 08.04.1998
(51) Int. Cl.: A47G 29/12, A45C 5/02, A47B 57/16, A47B 95/04

(54) **Encadrement de coffre**

(71) Demandeur: SIRANDRE SOCIETE ANONYME, 93000 Bobigny (FR)
(72) Inventeur: Levy, Henri, 95200 Sarcelles (FR); Diaz, Patricia, 75017 Paris (FR)
(74) Mandataire: Le Bras, Hervé

(57) **Abrégé**

L'invention concerne un encadrement de coffre ou panneau qui comporte quatre profilés creux réunis par des raccords d'angle (4a, 4b, 4c, 4d). Ces raccords d'angle sont réalisés par emboutissage de flans métalliques et comportent une portion médiane (22) dont la surface externe se raccorde sur les surfaces externes et avant des profilés adjacents, deux pattes latérales (25, 26) raccordées à la portion médiane (22) par un double cambrage (27, 28) et terminées par deux retours de pattes (29, 30) dont les extrémités (31, 32) sont en appui sur la paroi interne des profilés.

## Description

L'invention concerne un cadre pour ceinturer un coffre ou panneau ayant la forme d'un parallélépipède avec des arêtes vives, ce cadre étant constitué de profilés creux réunis aux angles du coffre ou panneau par des raccords d'angle qui comportent des éléments mâles s'emboîtant dans les cavités internes des profilés adjacents, lesdits profilés et raccords d'angle présentant sur les faces internes une feuillure pour recevoir les arêtes entourant la face avant dudit coffre ou panneau.

Ce type de cadre est souvent utilisé pour habiller des coffres, des boîtes aux lettres collectives ou des panneaux d'affichage, afin de leur donner un bel aspect esthétique ou pour arrondir les angles.

Les profilés creux comportent une paroi externe et une paroi interne parallèles reliées par des parois avant et arrière. La paroi avant est généralement hémisphérique et déborde sous le plan de la paroi interne à laquelle elle est reliée par une paroi intermédiaire qui forme avec la paroi interne la feuillure devant recevoir une arête de l'objet à ceinturer.

Les raccords d'angle sont en général réalisés par des procédés de fonderie. Il en résulte que ces pièces sont lourdes et coûteuses à réaliser.

Le but de l'invention est de proposer un cadre du type mentionné ci-dessus, dans lequel les raccords d'angle sont légers et faciles à réaliser.

L'invention atteint son but par le fait que les raccords d'angle sont réalisés par emboutissage à partir d'un flan métallique et comportent une portion médiane dont la surface externe se raccorde avec les surfaces externes et avant des profilés adjacents jusqu'à la feuillure, par le fait que les éléments mâles sont constitués de deux pattes latérales raccordées chacune à la portion médiane par un double cambrage et en appui sur les face internes des parois externes desdits profilés adjacents, et de deux retours de pattes formés par pliage des extrémités desdites deux pattes, lesdits deux retours étant en appui par leurs faces d'extrémité sur les parois internes desdits profilés adjacents, et par le fait que la paroi interne desdits profilés comporte deux épaulements pour empêcher le déplacement latéral desdits retours de pattes.

Grâce à cette disposition, le raccord d'angles est réalisé par découpe d'un flan dans une tôle. Le flan est ensuite déformé par emboutissage dans une presse, et se présente en finale sous la forme d'une peau épousant le contour externe des profilés.

D'autres avantages et caractéristiques de l'invention ressortiront à la lecture de la description suivante, faite à titre d'exemple et en référence aux dessins annexés dans lesquels:
la figure 1 est une vue de face d'un coffre ceinturé par un cadre selon l'invention;
la figure 2 montre une section transversale du profilé du cadre de la figure 1;
la figure 3 est une vue en perspective d'un raccord d'angle selon l'invention;
la figure 4 est une coupe d'un angle du cadre selon un plan médian.

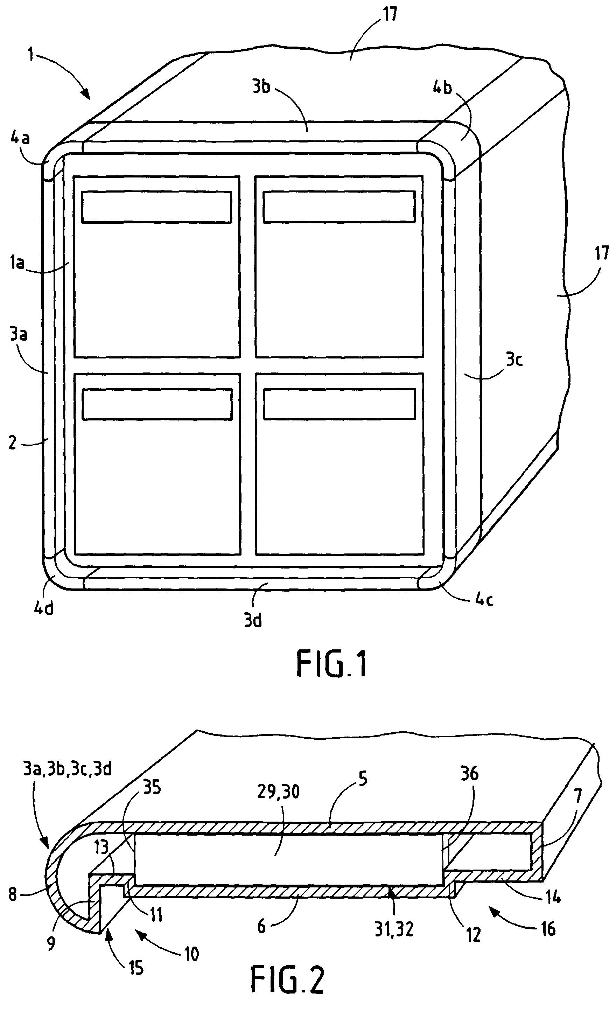

La figure 1 montre un coffre 1 de boîtes aux lettres collectives dont la face avant 1a est entourée par un cadre 2 comportant quatre profilés 3a, 3b, 3c, 3d reliés aux angles du cadre 2 par quatre raccords d'angle 4a, 4b, 4c, 4d.

La figure 2 montre la section des profilés 3a, 3b, 3c, 3d. Ces profilés comportent une paroi externe 5 et une paroi interne 6 parallèles entre elles. Ces parois 5 et 6 sont reliées entre elles à l'arrière par une paroi verticale 7 et à l'avant par une paroi semi-cylindrique 8 qui s'étend sous le plan de la paroi interne 6 et qui est reliée à cette dernière par une paroi intermédiaire verticale 9 qui forme avec la paroi interne 6 une feuillure 10 dans laquelle loge une arête du coffre 1. La paroi interne 6 comporte en outre près de la paroi intermédiaire 9 un premier épaulement 11 qui s'étend vers la paroi externe 5 et près de la paroi arrière 7 un deuxième épaulement 12 qui s'étend vers la paroi externe 5. Ces épaulements 11 et 12 dont la fonction sera expliquée plus loin sont réunis à la paroi intermédiaire 9 et à la paroi arrière 7 par des parois 13 et 14 parallèles à la paroi interne 6 qui définissent respectivement une rainure 15 et une deuxième feuillure 16. La rainure 15 permet le logement de têtes de vis de fixation de la paroi supérieure du coffre 1 sur son armature, et la deuxième feuillure 16 permet la fixation d'éléments d'habillage 17 des faces latérales du coffre 1.

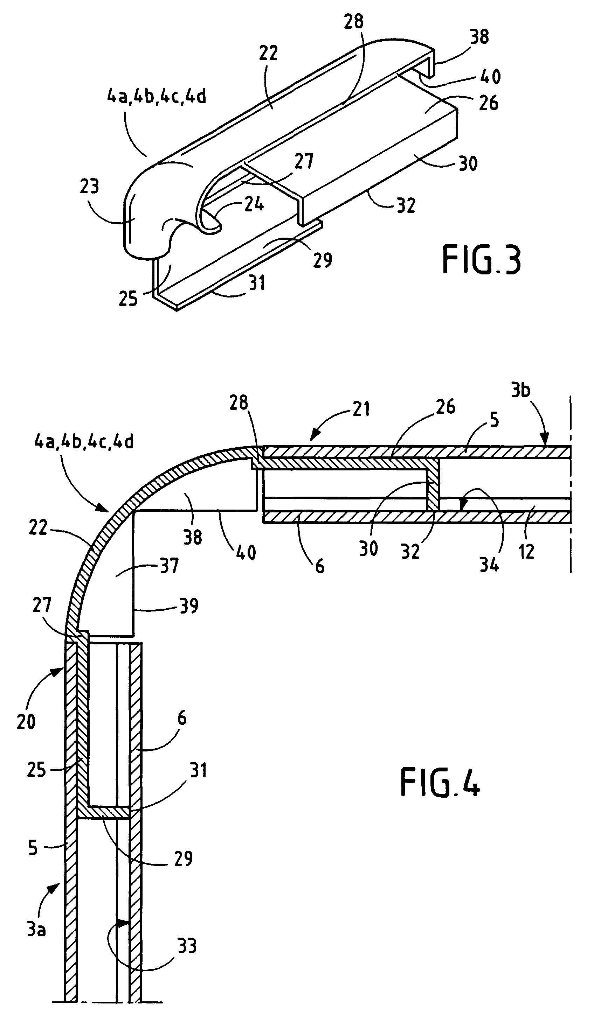

La figure 3 montre en perspective un raccord d'angle 4a, 4b, 4c, 4d selon l'invention, et la figure 4 montre la fixation d'un raccord d'angle, par exemple 4a, sur les extrémités adjacentes 20, 21 des deux profilés 3a, 3b.

Chaque raccord d'angle est réalisé par emboutissage à partir d'un flan métallique tiré d'une tôle. Elle présente une portion médiane 22 en forme de quart de cylindre dont la partie avant 23 est roulée en forme de demi-tore afin que son extrémité 24 se trouve dans le plan des parois intermédiaires 9 des deux profilés adjacents 3a, 3b. Deux pattes latérales 25, 26, perpendiculaires entre elles, sont raccordées à la portion médiane 22 par des doubles cambrages 27, 28. Des retours de pattes 29, 30 sont formés par pliage des extrémités des pattes 25, 26 à 90°.

Les pattes 25, 26 avec les retours de pattes 29, 30 forment les éléments mâles de chaque raccord d'angle qui s'emboîtent dans les cavités internes aux extrémités des profilés 3a, 3b. La hauteur des retours de pattes 29, 30 est sensiblement égale à la distance séparant la paroi externe 5 et la paroi interne 6 des profilés.

D'autre part la largeur des retours de pattes 29, 30 est sensiblement égale à la distance séparant les deux épaulements 11 et 12.

A l'état monté, les extrémités 31, 32 des retours de pattes 29 et 30 sont en appui sur les parois internes 6 des profilés 3a, 3b, et les pattes 25, 26 sont elles-mêmes en appui sur les faces internes 33, 34 des parois externes 5 des profilés 3a, 3b, tandis que les bords latéraux 35, 36 (voir figure 2) de chaque retour de pattes 29, 30 sont en appui respectivement sur les épaulements 11 et 12.

L'étendue de chaque raccord d'angle 4a, 4b, 4c, 4d vers l'arrière est sensiblement égale à la largeur des profilés 3a, 3b, 3c, 3d. De préférence, des parois repliées 37, 38, visibles sur les figures 3 et 4 sont prévues sur la face arrière de chaque raccord d'angle, les bords 39, 40 de ces parois repliées 37, 38 sont perpendiculaires entre eux et se trouvent dans le plan des parois 14 des profilés adjacents.

Les doubles cambrages 27, 28 sont calculés en fonction de l'épaisseur de la paroi externe 5 des profilés afin que la surface externe de chaque raccord d'angle se raccorde à la surface externe et avant des profilés adjacents 3a, 3b.

## Revendications

1. Cadre pour ceinturer un coffre (1) ou panneau ayant la forme d'un parallélépipède avec des arêtes vives, ce cadre étant constitué de profilés (3a, 3b, 3c, 3d) creux réunis aux angles du coffre ou panneau (1) par des raccords d'angle (4a, 4b, 4c, 4d) qui comportent des éléments mâles s'emboîtant dans les cavités internes des profilés adjacents, lesdits profilés et raccords d'angle présentant sur leurs faces internes une feuillure (10) pour recevoir les arêtes entourant la face avant (1a) dudit coffre ou panneau (1),
caractérisé par le fait que les raccords d'angle sont réalisés par emboutissage à partir d'un flan métallique et comportent une portion médiane (22) dont la surface externe se raccorde avec les surfaces externes et avant des profilés adjacents (3a, 3b) jusqu'à la feuillure (10), par le fait que les éléments mâles sont constitués de deux pattes latérales (25, 26) raccordées à la portion médiane (22) par un double cambrage (27, 28) et en appui sur les faces internes des parois externes (5) desdits profilés adjacents, et de deux retours de pattes (29, 30) formés par pliage des extrémités desdites deux pattes (25, 26), lesdits deux retours de pattes étant en appui par leurs faces d'extrémité (31, 32) sur les parois internes (6) desdits profilés adjacents (3a, 3b) et par le fait que la paroi interne (6) desdits profilés comporte deux épaulements (11, 12) pour empêcher le déplacement latéral desdits retours de pattes (29, 30).
